(19) **Europäisches Patentamt European Patent Office Office européen des brevets**

(11) **EP 1 376 277 B1**

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(21) Anmeldenummer: **03013531.3**

(22) Anmeldetag: **13.06.2003**

(51) Int Cl.:
**G05B 13/02** $^{(2006.01)}$

(54) **Verfahren zum Betätigen einer Haltebremse**

Method for actuating a holding brake

Procédé d'actionnement de frein d'arrêt

(84) Benannte Vertragsstaaten:
**AT BE BG CH CY CZ DE DK EE ES FI FR GB GR HU IE IT LI LU MC NL PT RO SE SI SK TR**

(30) Priorität: **29.06.2002 DE 10229350**

(43) Veröffentlichungstag der Anmeldung:
**02.01.2004 Patentblatt 2004/01**

(73) Patentinhaber: **Dr. Johannes Heidenhain GmbH 83292 Traunreut (DE)**

(72) Erfinder:
• **Kerner, Norbert**
**83374 Traunwalchen (DE)**
• **Kohler, Frieder**
**83362 Lauter (DE)**

(56) Entgegenhaltungen:
**WO-A-99/05578          JP-A- 2000 047 732
US-A- 5 144 213          US-B1- 6 317 637**

EP 1 376 277 B1

**Beschreibung**

Die Erfindung betrifft ein Verfahren zum Betätigen einer Haltebremse. Solche Haltebremsen werden in Antrieben mit Elektromotoren eingesetzt, um beispielsweise die vom Motor angetriebene Achse zu halten, wenn der Elektromotor stromlos ist und daher nicht von sich aus für einen sicheren Halt der Achse sorgen kann.

Ein Beispiel für einen Anwendungsbereich von Haltebremsen stellen numerisch kontrollierte Werkzeugmaschinen dar. Für jede der Achsen einer solchen Werkzeugmaschine ist ein Antrieb vorgesehen, dessen Motor über eine Reglerstruktur z.B. aus Positionsregler, Drehzahlregler und Stromregler kontrolliert wird. Von einer Numerischen Steuerung werden in diesem Beispiel Positionswerte vorgegeben, die dann von der Reglerstruktur in Ansteuersignale für das Leistungsteil des Motors umgesetzt werden. Die Einstellung der Regelparameter entscheidet darüber, wie genau der Antrieb, bestehend aus Motor, Leistungsteil und Reglerstruktur, die Vorgaben der Numerischen Steuerung umsetzt. So sind in einem PI-Regler vor allem die Verstärkungsfaktoren im proportionalen und integralen Teil des Reglers wichtig.

Sie bestimmen, wie stark auf eine Abweichung vom jeweiligen Sollwert reagiert wird.

Der Antrieb einer Werkzeugmaschine ist zwar in der Lage, eine Achse in einer vorgegebenen Position zu halten. Beim Abschalten des Antriebs, auch durch einen Stromausfall, wird dieser aber wirkungslos. Es sind daher an Werkzeugmaschinen üblicherweise auch mechanische Haltebremsen vorgesehen, die im stromlosen Zustand einfallen. Zum Lösen dieser Haltebremsen muß ein Strom beispielsweise durch einen Elektromagnet fließen. Vor allem hängende Achsen müssen über solche Haltebremsen gehalten werden, da hier ohne Antriebsregelung eine Bewegung der Achse durch die Schwerkraft der hängenden Last verursacht werden kann.

Soll eine Achse einer Werkzeugmaschine still gesetzt werden, so ist wie in der US 5144213 beschrieben darauf zu achten, daß sich die Zeit der Regelung des Achsantriebes überlappt mit der Zeit, in der die Haltebremse bereits eingefallen ist. Es droht sonst eine kurze Zeitspanne, in der die Achse weder durch den Antrieb noch durch eine Haltebremse gehalten wird.

Die Regelparameter eines Antriebs sind natürlich für einen Betrieb ohne eingelegte Haltebremse optimiert. Besonders in einer Werkzeugmaschine werden die Parameter oft so eingestellt, daß Bahnabweichungen eines Werkzeuges sehr aggressiv korrigiert werden, um Schleppfehler möglichst klein zu halten. Durch das Einlegen der Haltebremse ändern sich die Bedingungen aber völlig, da der Motor des Antriebs nun plötzlich eine wesentlich höhere Last erfährt. Dies führt dazu, daß im Antrieb unerwünschte Oszillationen entstehen, was sich z.B. durch ein Pfeifen des Motors wahrnehmen läßt. Diese Oszillationen sind nicht nur für den Bediener unangenehm, sie führen auch zu erhöhtem Verschleiß der Haltebremse. Es kann sogar vorkommen, daß sich die Haltebremse losreißt, da die Gleitreibung einer Haltebremse deutlich geringer ist als die Haftreibung

Die WO 99/05578 A1 beschreibt eine adaptive PID - Reglerstruktur, die variable, lastabhängige Verstärkungsfaktoren aufweist.

Die US 6317637 B1 beschreibt ein Verfahren, mit dem der Ausgang einer PID - Reglerstruktur bei Änderungen von Reglerparametern konstant gehalten werden kann.

In der JP 2000047732 AA wird vorgeschlagen, beim Lösen einer Haltebremse zwischen verschiedenen Verstärkungsfaktoren im Regelkreis eines Servoantriebs umzuschalten. Durch das Anwenden eines hohen Verstärkungsfaktors unmittelbar nach dem Lösen der Haltebremse und das Umschalten auf einen niedrigeren Verstärkungsfaktor einige Zeit später sollen einerseits eine Achse am Fallen gehindert werden und andererseits Oszillationen im Normalbetrieb vermieden werden. Zur Vermeidung von Oszillationen bei gleichzeitig eingefallener Bremse und aktiver Regelung beim Einlegen der Bremse ist diese Vorgehensweise aber nicht zielführend, da hier gerade hohe Verstärkungsfaktoren zu Schwingungen führen.

Wählt man die Regelparameter grundsätzlich so, daß auch beim Einlegen der Haltebremse keine Oszillationen auftreten, so wird sich dies negativ auf die Qualität des Regelkreises auswirken. Gleiches gilt für den Einsatz von Filtern im Regelkreis, die solche Oszillationen vermeiden, wenn sie auch bei nicht aktivierter Haltebremse wirken.

Aufgabe der Erfindung ist es, ein einfaches Verfahren zum Betätigen einer Haltebremse anzugeben, mit dem Oszillationen bei gleichzeitig eingefallener Haltebremse und aktiver Regelung vermieden oder stark verringert werden können.

Diese Aufgabe wird gelöst durch ein Verfahren nach Anspruch 1. Vorteilhafte Details des Verfahrens ergeben sich aus den von Anspruch 1 abhängigen Ansprüchen.

Es wird nun vorgeschlagen, zum Betätigen einer Haltebremse eines elektrischen Antriebs mit Motor und Regelkreis wenigstens einen der Regelparameter des Regelkreises in einem ersten Schritt so anzupassen, daß bei eingelegter Hältebremse Oszillationen vermieden oder stark verringert werden und in einem zweiten Schritt die Haltebremse zu betätigen.

Dieser Vorschlag beruht auf der Erkenntnis, daß einerseits bei aktivierter Haltebremse eine hohe Positioniergenauigkeit nicht gefordert ist und andererseits ein sicheres Festhalten der angetriebenen Achse auch mit im Vergleich zum Normalbetrieb deutlich veränderten Regelparametern möglich ist.

In Versuchen hat sich gezeigt, daß die Reduzierung der Verstärkungsfaktoren im proportionalen und integralen

Teil eines PI - Reglers, insbesondere eines Drehzahl- bzw. Geschwindigkeitsreglers, um einen Faktor zwischen zwei und zehn ca. 100 ms vor dem Einlegen der Haltebremse zu sehr guten Resultaten führt. Oszillationen im Moment des Bremseneingriffs lassen sich so fast vollständig vermeiden.

Beim Umschalten auf neue Regelparameter darf es nicht zu einer Änderung am Ausgang des jeweiligen Regelkreises kommen. Dies würde zu ungewollten und möglicherweise gefährlichen Bewegungen des Antriebes führen. Dem Regelkreis muß daher ein Korrekturwert zugeführt werden, der diese Änderung an seinem Ausgang verhindert. Dies läßt sich in einem Regler mit integralem Teil besonders vorteilhaft dadurch lösen, daß zum Integrierer ein Korrekturwert addiert wird. Dieser Korrekturwert wird beispielsweise so berechnet, daß die Summe aus erstens der Abweichung vom Sollwert multipliziert mit dem ursprünglichen proportionalen Verstärkungsfaktor und zweitens der aufintegrierten Abweichung vom Sollwert multipliziert mit dem integralen Verstärkungsfaktor gerade der Summe aus erstens der Abweichung vom Sollwert multipliziert mit dem verringerten proportionalen Verstärkungsfaktor und zweitens dem korrigierten Inhalt des Integrierers multipliziert mit dem integralen Verstärkungsfaktor entspricht. Da bei einer Reduzierung der Verstärkungsfaktoren hierzu der Inhalt des Integrierers vergrößert werden muß, soll im Folgenden von einem Aufladen des Integrierers gesprochen werden.

Besonders einfach läßt sich die Erfindung mit digitalen Reglern realisieren, da hier das Aufladen des Integrierers durch eine einfache Addition im entsprechenden Speicherregister des Integrierers erledigt werden kann. Die Berechnung des Korrekturwertes kann z.B. in der Software der Numerischen Steuerung geschehen.

Neben den Verstärkungsfaktoren der Regler im Regelkreis können im Regelkreis natürlich auch andere Regelparameter angepaßt werden. Wie weiter oben erwähnt können auch Filter vorgesehen sein, deren Filterparameter wie Frequenz, Dämpfung oder Zeitkonstante zweckmäßig zur Vermeidung von Oszillationen angepaßt werden können. Auch hierbei ist darauf zu achten, daß am Ausgang des Regelkreises keine Änderung entsteht, die als schlagartige Störgröße auf den Motor wirkt und von der Regelung erst wieder ausgeregelt werden muß.

Das hier beschriebene Verfahren zum Betätigen einer Haltebremse läßt sich natürlich auch zum Lösen einer Haltebremse verwenden. Bei eingelegter Haltebremse wird hierzu der Regler des Antriebs zunächst mit Regelparametern in Betrieb genommen, die Oszillationen vermeiden oder stark verringern. Erst dann wird die Haltebremse gelöst und kurze Zeit später, ggf. unter Berücksichtigung eines entsprechenden Korrekturwertes, auf die für eine hohe Regelgüte notwenigen Regelparameter umgeschaltet.

Es sei noch darauf hingewiesen, daß sich die Erfindung für rotatorische Antriebe genauso eignet wie für lineare Antriebe.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 1    einen numerisch gesteuerten Antrieb mit Haltebremse,

Figur 2    einen Regelkreis mit Drehzahlregler und Stromregler

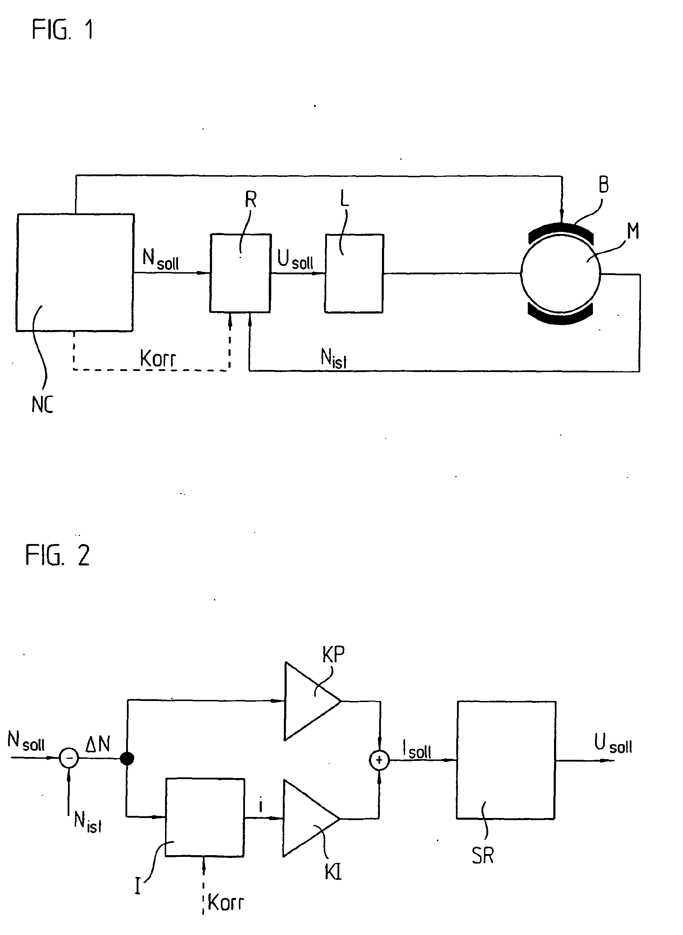

In Figur 1 ist eine Numerische Steuerung NC gezeigt, die einen Antrieb bestehend aus einem Regler R, einem Leistungsteil L und einem Motor M ansteuert. Die Numerische Steuerung NC liefert einen Sollwert Nsoll für die Drehzahl des Motors M an den Regler R. Der Regler R stellt Spannungssollwerte Usoll für das Leitungsteil L zur Verfügung, welches den Motor M etwa über eine Pulsweitenmodulation ansteuert. Ein Drehzahlmesser überwacht die Drehzahl des Motors M und liefert einen Ist-Wert Nist der Drehzahl zurück an den Regler R. Nicht dargestellt sind Stromsensoren, die Stromlstwerte an den Regler liefern. Eine Haltebremse B dient zum Feststellen der Achse und kann über die Numerische Steuerung NC betätigt werden.

Im Regler R, der in Figur 2 genauer dargestellt ist, befindet sich ein PI-Regler für die Drehzahl und ein Stromregler SR. Dieses System könnte beispielsweise zur Ansteuerung einer Werkzeugspindel dienen.

Soll eine positionierende Achse angesteuert werden, so wäre der Regler R um einen vorgeschalteten Lageregler zu ergänzen, der einen Lage-Sollwert von der Numerischen Steuerung NC und einen Lage-Istwert von einem Lagegeber entgegennimmt und einen Drehzahl-Sollwert Nsoll an den Drehzahlregler abgibt.

In Figur 2 ist zu erkennen, wie aus der Differenz $\Delta N$ zwischen Drehzahl-Sollwert Nsoll und Drehzahl-Istwert Nist ein Strom-Sollwert für den Stromregler SR erzeugt wird. Im proportionalen Teil wird die Differenz $\Delta N$ mit einem proportionalen Verstärkungsfaktor KP multipliziert, im integralen Teil wird die Differenz $\Delta N$ im Integrierer I zeitlich aufintegriert und die Integralsumme i mit einem integralen Verstärkungsfaktor KI multipliziert. Am Ausgang des Drehzahlreglers liegt die Summe der beiden Multiplikationen als Strom-Sollwert Isoll an. Der Stromregler SR erzeugt daraus wie erwähnt einen Spannungs-Sollwert Usoll, der an das Leistungsteil L übergeben wird.

Zum Einlegen der Haltebremse B wird nun in einem ersten Schritt wenigstens ein Regelparameter im Regelkreis angepaßt, hier durch eine deutliche Reduzierung der Verstärkungsfaktoren KP und KI. In diesem Moment kommt es nicht mehr auf eine genaue Einhaltung der vorgegebenen Drehzahl bzw. auf eine gute Positioniergenauigkeit an, diese Reduzierung schadet also nicht. Da sich durch die Reduzierung der Verstärkungsfaktoren KP und KI auch der Ausgang

des Drehzahlreglers Isoll ändern würde, muß dem Drehzahlregler aber ein Korrekturwert Korr zugeführt werden, der dies verhindert.

Am einfachsten gelingt dies, wenn der Integrierer I entsprechend aufgeladen wird. Der Korrekturwert Korr läßt sich wie oben beschrieben aus der Bedingung berechnen, daß sich durch die Änderung der Verstärkungsfaktoren KP und KI keine Änderung am Ausgang des Drehzahlreglers ergibt. Bezeichnet man die ursprünglichen Verstärkungsfaktoren mit KP1 und KI1, die reduzierten Verstärkungsfaktoren mit KP2 und KI2, so muß gelten:

$$\Delta N{*}KP1 + i{*}KI1 = \Delta N{*}KP2 + (i + Korr){*}KI2$$

In der Numerischen Steuerung NC läßt sich aus dieser Bedingung ein geeigneter Korrekturwert Korr berechnen, der bei einer Änderung der Verstärkungsfaktoren KP und KI im Drehzahlregler den Strom-Sollwert Isoll konstant hält.

Man erkennt aus obiger Beziehung auch, daß es in der Praxis günstig ist, vor dem Reduzieren der Regelparameter KP, KI einen ausgeregelten Zustand abzuwarten, so daß ΔN verschwindet. Die nötige Korrektur wird im beschriebenen Fall geringer. In anderen Regelanordnungen kann eine Korrektur dann sogar ganz überflüssig sein, etwa wenn im integralen Teil eines PI-Reglers bereits ΔN mit einem Verstärkungsfaktor KI multipliziert wird und erst dieses Produkt integriert wird (also in Figur 2 Integrierer I und Verstärker KI vertauscht sind). Am Ausgang des Reglers entsteht nämlich dann bei ΔN = 0 durch eine Änderung der Verstärkungsfaktoren KP, KI keine Änderung. Bevorzugt werden die Verstärkungsfaktoren KP, KI erst bei Stillstand des Motors M angepaßt.

Erst im zweiten Schritt, in der Praxis ca. 50 - 200 ms nach der Reduzierung der Verstärkungsfaktoren KP und KI, wird die Haltebremse B eingelegt. Oszillationen des Motors M aufgrund schlecht angepaßter Regelparameter werden dank der reduzierten Regelparameter nun zuverlässig verhindert.

Auf die Reihenfolge der beiden Schritte kommt es im hier beschriebenen Verfahren nicht unbedingt an: Es ist auch ein Ablauf denkbar, nach dem zunächst die Haltebremse B eingelegt wird und erst dann, evtl. nur bei Auftreten von Oszillationen, die Verstärkungsfaktoren KP, KI reduziert werden. Zum Detektieren der Oszillationen ist ggf. aber zusätzlicher Aufwand nötig, und Oszillationen lassen sich nicht mehr vollständig vermeiden. Beim Lösen der Haltebremse B ist die Umkehrung der beschriebenen Reihenfolge aber durchaus sinnvoll, da der Regler R hier mit reduzierten Verstärkungsfaktoren KP, KI in Betrieb genommen wird und erst nach dem Lösen der Haltebremse B höhere Verstärkungsfaktoren KP, KI zum Einsatz kommen. Auch hier muß wie beschrieben eine Änderung am Ausgang des Reglers R vermieden werden.

Ist der Regler R digital ausgeführt, so lassen sich die nötigen Anpassungen besonders leicht ausführen. Der Inhalt des Integrierers 1 kann für eine Berechnung nach obiger Gleichung leicht ausgelesen und z.B. in der Numerischen Steuerung NC zur Berechnung des Korrekturwertes Korr herangezogen werden. Im selben Rechenzyklus, in dem die Verstärkungsfaktoren KP, KI reduziert werden, kann der Korrekturfaktor Korr in den Integrierer 1 geladen werden, so daß kein Sprung am Ausgang des Drehzahlreglers entsteht.

**Patentansprüche**

1. Verfahren zum Betätigen einer Haltebremse (B) eines elektrischen Antriebs, der einen Motor (M) und einen Regelkreis (R) mit Regelparametern (KP, KI) aufweist, wobei wenigstens einer der Regelparameter (KP, KI) verändert wird, **gekennzeichnet durch** einen ersten Schritt, nach dem der wenigstens eine Regelparameter (KP, KI) noch vor dem Einlegen der Haltebremse (B) so verändert wird, daß beim Einlegen der Haltebremse (B) bei gleichzeitig aktivem Regelkreis (R) im zweiten Schritt Oszillationen vermieden oder stark verringert werden.

2. Verfahren nach Anspruch 1, **dadurch gekennzeichnet, daß** durch die Veränderung der Regelparameter (KP, KI) an einem Ausgang des Regelkreises (R) keine Änderung eintritt.

3. Verfahren nach Anspruch 1 oder 2, **dadurch gekennzeichnet, daß** vor der Veränderung der Regelparameter (KP, KI) zunächst ein ausgeregelter Zustand abgewartet wird.

4. Verfahren nach Anspruch 2 oder 3, **dadurch gekennzeichnet, daß** dem Regelkreis (R) ein Korrekturwert (Korr) zugeführt wird, der eine durch die Veränderung der Regelparameter (KP, KI) verursachte Änderung am Ausgang des Regelkreises (R) vermeidet.

5. Verfahren nach Anspruch 4, **dadurch gekennzeichnet, daß** der Inhalt (i) eines Integrierers (I) des Regelkreises (R) um den Korrekturwert (Korr) so geändert wird, daß sich der Ausgang des Reglers (R) aufgrund der veränderten Regelparameter (KP, KI) nicht ändert.

**6.** Verfahren nach einem der vorhergehenden Ansprüche, **dadurch gekennzeichnet, daß** im ersten Schritt ein proportionaler Verstärkungsfaktor (KP) und ein integraler Verstärkungsfaktor (KI) im Regelkreis (R) vor dem Einlegen der Haltebremse (B) reduziert werden.

**7.** Verfahren nach Anspruch 6, **dadurch gekennzeichnet, daß** der proportionale Verstärkungsfaktor (KP) und der integrale Verstärkungsfaktor (KI) in einem Drehzahl- bzw. Geschwindigkeitsregler reduziert werden.

**8.** Numerische Steuerung für eine Werkzeugmaschine mit einem Antrieb bestehend aus einem Regler (R) und einem Motor (M) mit einer Haltebremse (B), eingerichtet zur Durchführung eines Verfahrens nach einem der Ansprüche 1 - 7.

**Claims**

**1.** Method for actuating a holding brake (B) of an electrical drive, which has a motor (M) and a control circuit (R) with control parameters (KP, KI), at least one of the control parameters (KP, KI) being changed, **characterised by** a first step, according to which the at least one control parameter (KP, KI) is changed, even prior to application of the holding brake (B), such that during application of the holding brake (B), with a simultaneously active control circuit (R), in the second step oscillations are avoided or greatly reduced.

**2.** Method according to claim 1, **characterised in that**, by means of the change in the control parameters (KP, KI) at one output of the control circuit (R), no change occurs.

**3.** Method according to claim 1 or 2, **characterised in that**, prior to the change in the control parameters (KP, KI), firstly a settled state is awaited.

**4.** Method according to claim 2 or 3, **characterised in that** a correction value (corr) is supplied to the control circuit (R) which avoids a change at the output of the control circuit (R), which change is caused by the change in the control parameters (KP, KI).

**5.** Method according to claim 4, **characterised in that** the content (i) of an integrator (I) of the control circuit (R) is changed by the correction value (corr) such that the output of the controller (R) does not change due to the changed control parameters (KP, KI).

**6.** Method according to one of the preceding claims, **characterised in that**, in the first step, a proportional amplification factor (KP) and an integral amplification factor (KI) are reduced in the control circuit (R) prior to application of the holding brake (B).

**7.** Method according to claim 6, **characterised in that** the proportional amplification factor (KP) and the integral amplification factor (KI) are reduced in a speed governor or speed controller.

**8.** Numerical control for a machine tool having a drive which comprises a controller (R) and a motor (M) with a holding brake (B), equipped for implementing a method according to one of the claims 1-7.

**Revendications**

**1.** Procédé d'actionnement d'un frein d'arrêt (B) d'un entraînement électrique comprenant un moteur (M), un circuit de régulation (R) avec des paramètres de régulation (KP, KI) dont l'un au moins varie, **caractérisé en ce qu'**il comporte une première étape après laquelle le paramètre de régulation (KP, KI) au nombre d'un au moins est encore modifié avant l'engagement du frein d'arrêt (B) de manière qu'à cet engagement (B) avec en même temps activation du circuit de régulation (R) des oscillations sont éliminées ou fortement réduites à la deuxième étape.

**2.** Procédé selon la revendication 1, **caractérisé en ce que** la variation des paramètres de régulation (KP, KI) ne produit aucune variation à la sortie du circuit de régulation (R).

**3.** Procédé selon la revendication 1 ou 2, **caractérisé en ce qu'**avant de faire varier les paramètres de régulation (KP, KI), on atteint un état régulé.

4. Procédé selon la revendication 2 ou 3, **caractérisé en ce qu'**au circuit de régulation (R) est envoyé une valeur de correction (Korr) qui évite à la sortie du circuit de régulation (R) une variation du fait de la variation des paramètres de régulation (KP, KI).

5. Procédé selon la revendication 4, **caractérisé en ce que** le contenu d'un intégrateur (I) du circuit de régulation (R) est modifié de la valeur de correction de manière que la sortie du régulateur (R) ne varie pas du fait de la variation des paramètres de régulation (KP, KI).

6. Procédé selon une des revendications précédentes, **caractérisé en ce qu'**à la première étape un facteur proportionnel d'amplification (KP) et un facteur intégral d'amplification (KI) sont réduits dans le circuit de régulation (R) avant l'engagement du frein d'arrêt (B).

7. Procédé selon la revendication 6, **caractérisé en ce que** le facteur proportionnel d'amplification (KP) et le facteur intégral d'amplification (KI) sont réduits dans un régulateur de vitesse de rotation ou de déplacement.

8. Commande numérique pour une machine-outil avec un entraînement composé d'un régulateur (R) et d'un moteur (M) équipé d'un frein d'arrêt (B), conçue pour la mise en oeuvre d'un procédé selon une des revendications 1 à 7.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5144213 A
- WO 9905578 A1

- US 6317637 B1
- JP 2000047732 B